# EUROPÄISCHE PATENTSCHRIFT

(11) **EP 2 470 868 B1**
(45) Veröffentlichungstag und Bekanntmachung des Hinweises auf die Patenterteilung: **24.12.2014**
(21) Anmeldenummer: 10728675.9
(22) Anmeldetag: 05.07.2010
(51) Int. Cl.: G01D 11/30

(54) **ANSCHLUSSANORDNUNG FÜR EINE SENSORANORDNUNG UND SENSORANORDNUNG**
CONNECTION ASSEMBLY FOR A SENSOR ASSEMBLY AND SENSOR ASSEMBLY
SYSTÈME DE CONNEXION POUR SYSTÈME CAPTEUR ET SYSTÈME CAPTEUR CORRESPONDANT

(30) Priorität: 28.08.2009 DE 102009028963
(43) Veröffentlichungstag der Anmeldung: 04.07.2012
(73) Patentinhaber: Robert Bosch GmbH, 70442 Stuttgart (DE)
(72) Erfinder: STEINBRINK, Ronald, 99086 Erfurt (DE); KLUGE, Sven, Eisenach 99817 (DE); ORTMANN, Stefan, Schwarzhausen 99891 (DE); SCHULZE, Steffen, 99817 Eisenach (DE); MATTHIE, Daniel, Eisenach 99817 (DE); LIEBETRAU, Jens, Mihla 99826 (DE); WEISHAEUTEL, Frank, 99869 Wangenheim (DE); BEYERSDORFER, Jan, Foertha 99819 (DE)
(86) Internationale Anmeldenummer: PCT/EP2010/059555
(87) Internationale Veröffentlichungsnummer: WO 2011/023439

(56) Entgegenhaltungen:
- DE-A1- 19 618 631
- DE-A1-102005 012 709

## Beschreibung

Die Erfindung geht aus von einer Anschlussanordnung für eine Sensoranordnung nach der Gattung des unabhängigen Patentanspruchs 1, und von einer korrespondierenden Sensoranordnung.

In der Offenlegungsschrift DE 10 2005 012 709 A1 wird beispielsweise ein Magnetfeldsensor, insbesondere ein Drehzahl- und/oder Drehrichtungssensor für ein Fahrzeugrad oder für den Triebstrang eines Fahrzeugs beschrieben. Der beschriebene Magnetfeldsensor weist einen Halter für ein Sensorelement und gegebenenfalls weitere Sensorbauteile auf. Der Halter ist als Kunststoffspritzteil ausgeführt und besitzt eine taschenartige Aussparung im Bereich seiner leseseitigen Stirnfläche, in welcher das Sensorelement bei der abschließenden Umspritzung mit Kunststoff zumindest in Spritzdruckrichtung abgestützt und somit gegen mechanische Beschädigung geschützt ist. Eine Anschlussanordnung für den beschriebenen Magnetfeldsensor weist ein Anschlusselement auf, welches in einem ersten Kontaktierungsbereich zwei Anschlussstücke aufweist, welche jeweils über eine Crimpverbindung elektrisch und mechanisch mit den abisolierten Enden eines Anschlusskabels verbunden sind. In einem zweiten Kontaktierungsbereich sind die Anschlussstücke elektrisch und mechanisch mit Anschlussleitungen eines Sensorelements verbindbar. Das Anschlusselement ist zumindest teilweise von einer Kunststoffumspritzung umhüllt, welche in einem Übergangsbereich zwischen dem ersten Kontaktierungsbereich und dem zweiten Kontaktierungsbereich eine fensterförmige Aussparung aufweist, welche während des Spritzvorgangs der Kunststoffumspritzung im Spritzgusswerkzeug abgedichtet ist. Diese Anschlussstücke sind zunächst zur Erleichterung der Positionierung des Anschlusselements vor dem Spritzvorgang einteilig und werden anschließend durch das Trennen der Verbindungsteile elektrisch gegeneinander isoliert. Ein zwischen den Crimpverbindungen vorhandener Verbindungssteg wird in der Regel nach dem Vercrimpen der Einzeladern und vor dem Spritzvorgang so gebogen, dass die beiden Crimpverbindungen der Einzeladern näher nebeneinander stehen. Der größere Abstand vor dem Herstellen der Crimpverbindungen ist erforderlich, da aus dem Material des als Stanzstreifens ausgeführten Anschlusselements die Crimpfahnen gebogen werden. Die Anschlussstücke des Magnetfeldsensors zur anschließenden Kontaktierung des Sensorelements sollten jedoch näher nebeneinander stehen. Die Kanten des gebogenen Verbindungsstegs zwischen den beiden Crimpverbindungen müssen im Spritzgusswerkzeug durch eine ungünstige stufige Abdichtung abgedichtet werden, sind dadurch aber schwer zu positionieren, was zu erhöhtem Verschleiß des Werkzeugs oder zu Überspritzungen führen kann. Die Überspritzungen wiederum können sich ungünstig auf nachfolgende Prozesse, beispielsweise auf einen Widerstandsschweißprozess zur Kontaktierung des Sensorelements auswirken.

Die Offenlegungsschrift DE 196 18 631 A1 offenbart eine Vorrichtung zur Messung von Dreh- oder Winkelbewegungen und zum Erzeugen eines die Bewegung darstellenden elektrischen Signals. Die Vorrichtung besteht aus einem Messwertgeber oder Encoder, der mit dem Körper, dessen Bewegung gemessen werden soll, umläuft, und aus einem stationären Messwertaufnehmer. Dieser Messwertaufnehmer enthält in einem Gehäuse die zum Erzeugen des elektrischen Signals vorgesehenen Bauteile. Über ein Anschlusskabel werden die Signale aus dem Gehäuse herausgeführt. Erfindungsgemäß besteht das Gehäuse aus zwei Halbschalen, die aus Kunststoff gefertigt sind und die nach dem Einfügen der elektrischen Bauteile und Einlegen des Anschlusskabels durch Kleben oder Verschweißen verbunden sind. Der Innenraum der beiden verbundenen Halbschalen ist mit einem Heißschmelzkleber ausgefüllt.

### Offenbarung der Erfindung

Die erfindungsgemäße Anschlussanordnung für eine Sensoranordnung mit den Merkmalen des unabhängigen Patentanspruchs 1 hat demgegenüber den Vorteil, dass in einem Übergangsbereich zwischen einem ersten Kontaktierungsbereich und einem zweiten Kontaktierungsbereich eine Positionierungsöffnung so angeordnet ist, dass das Anschlusselement im Spritzgusswerkzeug positionierbar ist, und der die Positionierungsöffnung umgebende Übergangsbereich im Spritzgusswerkzeug zur Erzeugung einer fensterförmigen Aussparung in einer Kunststoffumspritzung flächig abgedichtet ist. Durch die Positionierungsöffnung ist in vorteilhafter Weise eine einfache und schnelle Positionierung des Anschlusselements im Spritzgusswerkzeug möglich. Zudem werden durch die flächige Abdichtung des Übergangsbereichs im Spritzwerkzeug in vorteilhafter Weise Überspritzungen vermieden, die sich nachteilig auf nachfolgende Prozesse auswirken können. Die flächige Abdichtung im Übergangsbereich kann beispielsweise dadurch erreicht werden, dass erforderliche Biegekanten des Anschlusselements innerhalb der Kunststoffumspritzung und somit außerhalb der fensterförmigen Aussparung positioniert werden. Zudem werden vorhandene Übergänge zwischen unterschiedlichen Kontaktierungsebenen durch Schrägflächen und nicht durch senkrechte Stufen mit einander verbunden, um die flächige Abdichtung im Spritzwerkzeug zu ermöglichen.

Die erfindungsgemäße Anschlussanordnung beschreibt ein Vorprodukt bei der Herstellung einer Sensoranordnung, insbesondere zur Messung von Drehzahlen und/oder Drehrichtungen, welches über ein Anschlusselement im ersten Kontaktierungsbereich elektrisch und mechanisch mit mindestens einem Ende einer Ader eines Anschlusskabels verbunden ist und im zweiten Kontaktierungsbereich in einem weiteren Fertigungsschritt elektrisch und mechanisch mit einem Sensorelement verbindbar ist. Das Anschlusselement ist beispielsweise als Stanzteil ausgeführt und wird nach der Verbindung mit dem Anschlusskabel während eines Spritzvorgangs zumindest teilweise von der Kunststoffumspritzung umhüllt, welche im Übergangsbereich eine fensterförmige Aussparung aufweist, welche während des Spritzvorgangs der Kunststoffumspritzung im Spritzgusswerkzeug abgedichtet ist. Die fensterförmige Aussparung wird im weiteren Fertigungsschritt verwendet, um den zweiten Kontaktierungsbereich elektrisch und mechanisch mit dem Sensorelement zu verbinden.

Durch die in den abhängigen Ansprüchen aufgeführten Maßnahmen und Weiterbildungen sind vorteilhafte Verbesserungen der im unabhängigen Patentanspruch 1 angegebenen Anschlussanordnung für eine Sensoranordnung möglich.

Besonders vorteilhaft ist, dass der Übergangsbereich zur Überbrückung eines vorhandenen Höhenunterschieds, der dadurch entsteht, dass der erste Kontaktierungsbereich und der zweite Kontaktierungsbereich in verschiedenen Ebenen angeordnet sind, als schräge Ebene ausgeführt ist, in welcher zwei Übergangsstege die Positionierungsöffnung seitlich begrenzen. Die Ausführung des Übergangsbereichs als schräge Ebene ermöglicht in vorteilhafter Weise eine flächige Abdichtung während des Spritzprozesses, obwohl ein Höhenunterschied zwischen den beiden Kontaktierungsbereichen überbrückt werden muss.

In Ausgestaltung der erfindungsgemäßen Anschlussanordnung sind im ersten Kontaktierungsbereich zwei erste Anschlussstücke angeordnet, welche über einen ersten Verbindungssteg mit einander verbunden sind, wobei der erste Verbindungssteg die Positionierungsöffnung an einem Ende begrenzt. Der erste Verbindungssteg ermöglicht in vorteilhafter Weise eine einteilige Ausführung des Anschlusselements, wodurch die Positionierung und die Handhabung während des Spritzvorgangs erleichtert werden.

In weiterer Ausgestaltung der erfindungsgemäßen Anschlussanordnung sind im zweiten Kontaktierungsbereich zwei zweite Anschlussstücke angeordnet, welche über einen zweiten Verbindungssteg mit einander verbunden sind, wobei der zweite Verbindungssteg die Positionierungsöffnung am anderen Ende begrenzt. Durch den zweiten Verbindungssteg wird die Steifigkeit und Stabilität des einteiligen Anschlusselements weiter erhöht, so dass die Positionierung und die Handhabung während des Spritzvorgangs weiter verbessert werden.

In weiterer Ausgestaltung der erfindungsgemäßen Anschlussanordnung verbindet ein erster Übergangssteg ein erstes Anschlussstück mit einem korrespondierenden zweiten Anschlussstück, und ein zweiter Übergangssteg verbindet ein anderes erstes Anschlussstück mit einem korrespondierenden anderen zweiten Anschlussstück. Das bedeutet, dass die ersten Anschlussstücke über die Übergangsstege, welche die Positionierungsöffnung seitlich begrenzen, jeweils mit einem korrespondierenden zweiten Anschlussstück verbunden sind.

In weiterer Ausgestaltung der erfindungsgemäßen Anschlussanordnung werden der erste Verbindungssteg und/oder der zweite Verbindungssteg nach dem Spritzvorgang durchtrennt, um die beiden ersten Anschlussstücke und/oder die beiden zweiten Anschlussstücke von einander zu trennen. Dadurch entstehen zwei elektrisch von einander isolierte Signalpfade, über die das Sensorelement mit dem Anschlusskabel verbunden werden kann.

In weiterer Ausgestaltung der erfindungsgemäßen Anschlussanordnung erfolgt im ersten Kontaktierungsbereich die elektrische und mechanische Verbindung der ersten Anschlussstücke mit jeweils einem Ende einer Ader des Anschlusskabels über eine Crimpverbindung oder eine Löt- und/oder Schweißverbindung. Die Crimpverbindung zwischen den ersten Anschlussstücken und jeweils einem Ende einer Ader des Anschlusskabels ist beispielsweise durch als Crimpfahne ausgeführte erste Anschlussstücke oder durch zusätzliche Crimpelemente herstellbar. Die als Crimpfahne ausgeführten ersten Anschlussstücke werden nach dem Herstellen der jeweiligen Crimpverbindung umgebogen, wobei der jeweilige Biegebereich außerhalb des Dichtbereichs zur Herstellung der fensterförmigen Aussparung angeordnet ist. Die Anordnung des Biegebereichs außerhalb des Dichtbereichs ermöglicht in vorteilhafter Weise eine flächige Abdichtung im Spritzwerkzeug.

Die erfindungsgemäße Anschlussanordnung kann für eine Sensoranordnung mit einem Sensorelement, insbesondere zur Messung der Drehzahl und/oder der Drehrichtung verwendet werden.

Ausführungsbeispiele der Erfindung sind in den Zeichnungen dargestellt und werden in der nachfolgenden Beschreibung näher erläutert.

### Kurze Beschreibung der Zeichnungen

Figur 1 zeigt eine schematische, perspektivische Ansicht eines ersten Ausführungsbeispiels eines Anschlusselements für eine erfindungsgemäße Anschlussanordnung für eine Sensoranordnung.
Figur 2 zeigt eine schematische, perspektivische Ansicht des ersten Ausführungsbeispiels des Anschlusselements aus Fig. 1, das mit einem Anschlusskabel elektrisch und mechanisch verbunden ist.
Figur 3 zeigt eine schematische, perspektivische Ansicht eines Ausführungsbeispiels einer erfindungsgemäßen Anschlussanordnung für eine Sensoranordnung mit einem Anschlusselement, das gemäß dem in Figur 1 oder 2 dargestellten ersten Ausführungsbeispiel ausgeführt ist,
Figur 4 zeigt eine schematische Draufsicht des in Figur 3 dargestellten Ausführungsbeispiels der erfindungsgemäßen Anschlussanordnung für eine Sensoranordnung mit einer durchsichtig dargestellten Kunststoffumhüllung,
Figur 5 zeigt eine schematische, perspektivische Ansicht eines zweiten Ausführungsbeispiels eines mit einem Anschlusskabel elektrisch und mechanisch verbundenen Anschlusselements für eine erfindungsgemäße Anschlussanordnung für eine Sensoranordnung, und
Figur 6 zeigt eine schematische, perspektivische Ansicht eines dritten Ausführungsbeispiels eines mit einem Anschlusskabel elektrisch und mechanisch verbundenen Anschlusselements für eine erfindungsgemäße Anschlussanordnung für eine Sensoranordnung,

### Ausführungsformen der Erfindung

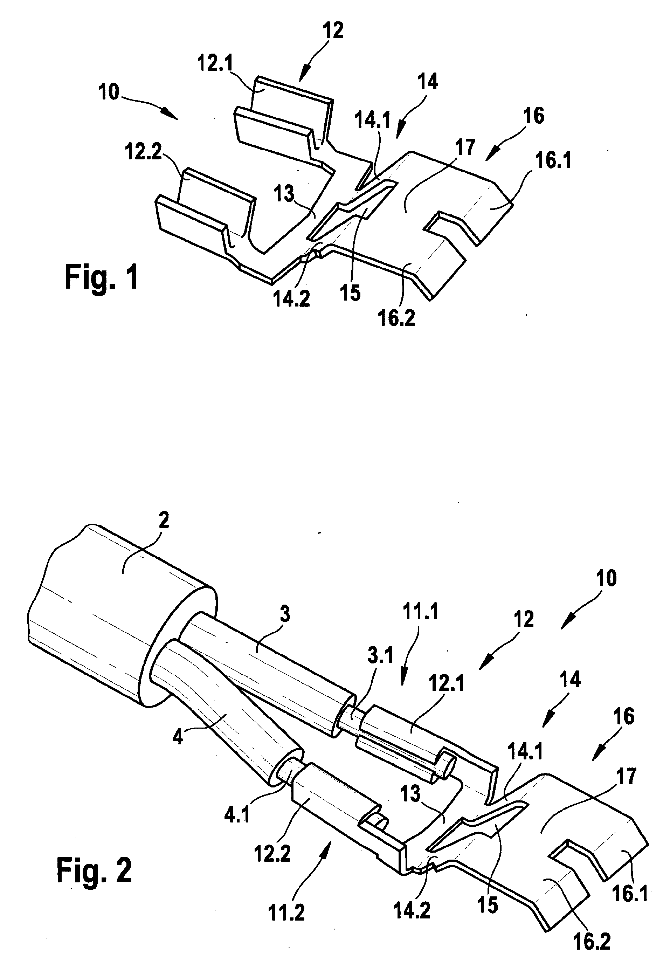

In den begleitenden Fig. 1 bis 6 bezeichnen gleiche Bezugszeichen durchgehend Elemente bzw. Komponenten, welche gleiche bzw. analoge Funktionen ausführen.

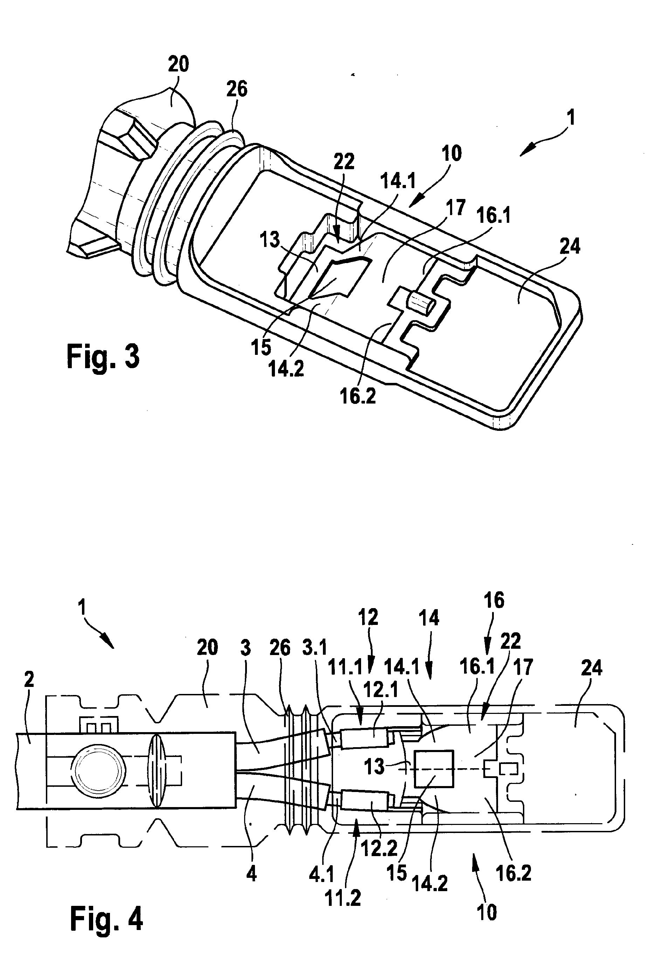

Fig. 1 und 2 zeigen jeweils eine schematische, perspektivische Ansicht eines ersten Ausführungsbeispiels eines Anschlusselements 10 für eine in Fig. 3 und 4 dargestellte erfindungsgemäße Anschlussanordnung 1 für eine Sensoranordnung. Hierbei zeigt Fig. 1 das Anschlusselement 10 vor der Verbindung mit einem zweiadrigen Anschlusskabel 2, und Fig. 2 zeigt das Anschlusselement 10 nach der Herstellung einer doppelten Crimpverbindung 11.1, 11.2 mit dem zweiadrigen Anschlusskabel 2.

Wie aus Fig. 1 oder 2 ersichtlich ist, umfasst das erste Ausführungsbeispiel des Anschlusselements 10 in einem ersten Kontaktierungsbereich 12 zwei als Crimpfahnen ausgeführte erste Anschlussstücke 12.1, 12.2, die über einen ersten Verbindungssteg 13 mit einander verbunden sind. Wie insbesondere aus Fig. 2 ersichtlich ist, sind die beiden ersten Anschlussstücke 12.1, 12.2 im ersten Kontaktierungsbereich 12 durch korrespondierende Crimpverbindungen 11.1, 11.2 elektrisch und mechanisch jeweils mit einem abisolierten Ende 3.1, 4.1 einer Ader 3, 4 des Anschlusskabels 2 verbunden. In einem zweiten Kontaktierungsbereich 16 umfasst das Anschlusselement 10 zwei zweite Anschlussstücke 16.1, 16.2, welche über einen zweiten Verbindungssteg 17 mit einander verbunden sind. Im zweiten Kontaktierungsbereich 16 können die beiden zweiten Anschlussstücke 16.1, 16.2 in einem weiteren Fertigungsschritt elektrisch und mechanisch mit einem nicht dargestellten Sensorelement verbunden werden. In einem Übergangsbereich 14 zwischen dem ersten Kontaktierungsbereich 12 und dem zweiten Kontaktierungsbereich 16 ist eine Positionierungsöffnung 15 angeordnet, welche seitlich durch zwei Übergangsstege 14.1, 14.2 begrenzt ist, wobei ein erster Übergangssteg 14.1 ein erstes Anschlussstück 12.1 mit einem zweiten Anschlussstück 16.1 verbindet, und ein zweiter Übergangssteg 14.2 das andere erste Anschlussstück 12.2 mit dem anderen zweiten Anschlussstück 16.2 verbindet. Dadurch ist es möglich, durch Auftrennen des ersten Verbindungsstegs 13, der die Positionierungsöffnung 15 an einem Ende begrenzt, und des zweiten Verbindungsstegs, der die Positionierungsöffnung 15 am anderen Ende begrenzt, zwei elektrisch getrennte Signalpfade zu schaffen, über welche die nicht dargestellte Sensoranordnung mit dem Anschlusskabel 2 elektrisch gekoppelt werden kann.

Wie aus Fig. 1 und 2 weiter ersichtlich ist, sind der erste Kontaktierungsbereich 12 und der zweite Kontaktierungsbereich 16 des Anschlusselements 10 in verschiedenen Ebenen angeordnet, wobei der Übergangsbereich 14 zur Überbrückung des vorhandenen Höhenunterschieds als schräge Ebene ausgeführt ist. Das Anschlusselement 10 ist beispielsweise als Stanzteil ausgeführt, das nach dem Stanzen in eine gewünschte Form umgeformt wird. Hierbei wird der erste Kontaktierungsbereich 12 nach dem Herstellen der beiden Crimpverbindungen 12.1, 12.2 so gebogen, dass die Einzeladern 3, 4 des Anschlusskabels 2 näher nebeneinander stehen. Der größere Abstand vor dem Herstellen der Crimpverbindung ist erforderlich, da die als Crimpfahnen ausgeführten ersten Anschlussstücke 12.1, 12.2 aus dem Material des Stanzstreifens gebogen werden. Zudem wird das Anschlusselement 10 an den Rändern des Übergangsbereichs 14 zwischen dem ersten Kontaktierungsbereich 12 und dem zweiten Kontaktierungsbereich 16 so gebogen, dass eine schräge Ebene zur Überbrückung des gewünschten Höhenunterschieds zwischen den beiden Kontaktierungsbereichen 12, 16 entsteht.

Wie aus Fig. 3 und 4 ersichtlich ist, ist das Anschlusselement 10 zumindest teilweise von einer Kunststoffumspritzung 20 umhüllt, welche im Übergangsbereich 14 eine fensterförmige Aussparung 22 aufweist. Die fensterförmige Aussparung 22 ist während des Spritzvorgangs der Kunststoffumspritzung 20 im Spritzgusswerkzeug abgedichtet, um Überspritzungen in dem von Kunststoff freizuhaltenden Bereich zu verhindern. Das Anschlusselement 10 wird im Spritzgusswerkzeug über die Positionierungsöffnung 15 im Anschlusselement 10 positioniert. Der die Positionierungsöffnung 15 umgebende Bereich, d.h. die beiden Verbindungsstege 13, 17 und die beiden Übergangsstege 14.1, 14.2, wird zur Erzeugung der fensterförmigen Aussparung 22 flächig im Spritzgusswerkzeug abgedichtet. Die Biegungen im ersten Kontaktierungsbereich 12 zur Erreichung des erforderlichen Abstands zwischen den beiden Crimpverbindungen 12.1, 12.2 erfolgt außerhalb dieses Dichtbereichs, so dass die Biegebereiche innerhalb der Kunststoffumspritzung 20 angeordnet sind. Nach dem Spritzvorgang werden der erste Verbindungssteg 13 und der zweite Verbindungssteg 17 durchtrennt, was in Fig. 4 durch eine gepunktete Linie dargestellt ist, um die beiden ersten Anschlussstücke 12.1, 12.2 und die beiden zweiten Anschlussstücke 16.1, 16.2 jeweils elektrisch von einander zu isolieren, um die bereits erwähnten elektrisch getrennten Signalpfade zu erzeugen.

Die erfindungsgemäße Anschlussanordnung 1 beschreibt ein Vorprodukt bei der Herstellung einer Sensoranordnung, insbesondere zur Messung von Drehzahlen und/oder Drehrichtungen. Über das Anschlusselement 10 verbindet die Anschlussanordnung 1 ein nicht dargestelltes Sensorelement elektrisch mit dem Anschlusskabel 1. Wie aus Fig. 3 und 4 weiter ersichtlich ist, weist die Anschlussanordnung 1 einen Auflagebereich 24 für das nicht dargestellte Sensorelement auf, das in einem weiteren Fertigungsschritt beispielsweise über einen Widerstandsschweißvorgang mit der Anschlussanordnung 1 verbunden werden kann. Die elektrische Kontaktierung des Sensorelements mit der Anschlussanordnung 1 erfolgt hierbei über die zweiten Anschlussstücke 16.1, 16.2. Nach der Verbindung mit der Anschlussanordnung 1 wird die entstandene Sensoranordnung nochmals mit Kunststoff umspritzt. Zu diesem Zweck weist die Kunststoffumhüllung 20 der Anschlussanordnung 1 zur sicheren Einbindung in die Gesamtumhüllung Anschmelzrippen 26 auf. Als thermoplastischer Kunststoff sowohl für die Umhüllung 20 wie auch für die Gesamtumhüllung der Sensoranordnung kann jeweils der gleiche Polyamid-Werkstoff verwendet werden.

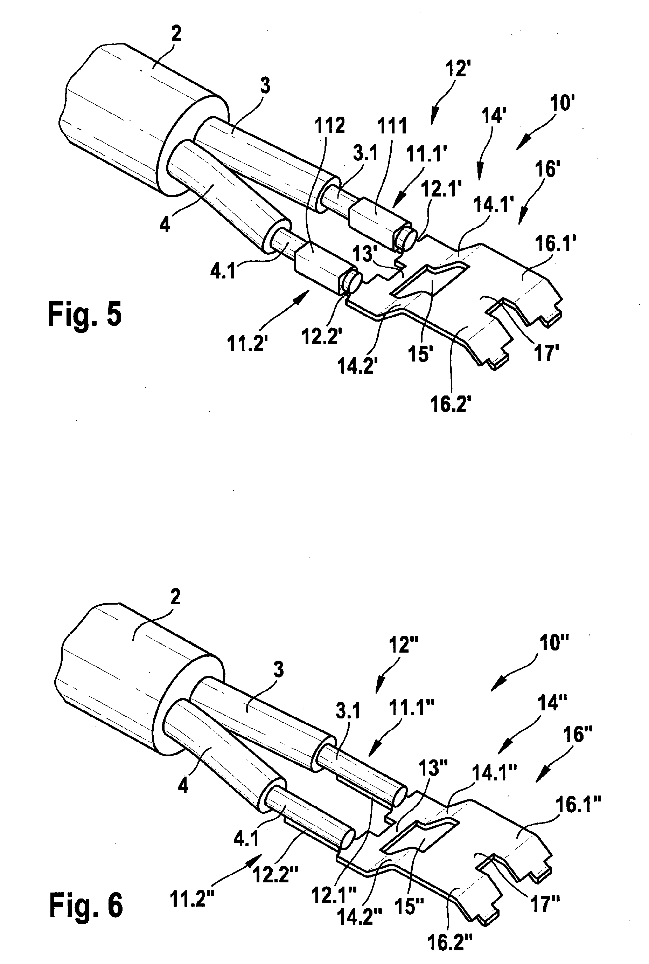

Nachfolgend werden unter Bezugnahme auf Fig. 5 und 6 noch zwei weitere Ausführungsbeispiele eines Anschlusselements 10', 10" für eine erfindungsgemäße Anschlussanordnung für eine Sensoranordnung beschrieben.

Fig. 5 zeigt eine schematische, perspektivische Ansicht eines zweiten Ausführungsbeispiels des Anschlusselements 10' für eine erfindungsgemäße Anschlussanordnung für eine Sensoranordnung. Hierbei zeigt Fig. 5 das Anschlusselement 10' nach der Herstellung einer doppelten Crimpverbindung 11.1', 11.2' mit einem zweiadrigen Anschlusskabel 2.

Wie aus Fig. 5 ersichtlich ist, umfasst das zweite Ausführungsbeispiel des Anschlusselements 10' analog zum ersten Ausführungsbeispiel in einem ersten Kontaktierungsbereich 12' zwei erste Anschlussstücke 12.1', 12.2', die über einen ersten Verbindungssteg 13' mit einander verbunden sind. Die beiden ersten Anschlussstücke 12.1', 12.2' sind im ersten Kontaktierungsbereich 12' durch korrespondierende Crimpverbindungen 11.1', 11.2', die im Unterschied zum ersten Ausführungsbeispiel über zusätzliche Crimpelemente 111, 112 hergestellt werden, elektrisch und mechanisch jeweils mit einem abisolierten Ende 3.1, 4.1 einer Ader 3, 4 des Anschlusskabels 2 verbunden. Durch die Verwendung der zusätzlichen Crimpelemente 111, 112 weisen die beiden ersten Anschlussstücke 12.1', 12.2' ohne weitere Biegevorgänge schon vor dem Herstellen der beiden Crimpverbindungen 12.1', 12.2' den gewünschten Abstand zu einander auf. In einem zweiten Kontaktierungsbereich 16' umfasst das Anschlusselement 10' analog zum ersten Ausführungsbeispiel zwei zweite Anschlussstücke 16.1', 16.2', welche über einen zweiten Verbindungssteg 17' mit einander verbunden sind. Im zweiten Kontaktierungsbereich 16' können die beiden zweiten Anschlussstücke 16.1', 16.2' in einem weiteren Fertigungsschritt elektrisch und mechanisch mit einem nicht dargestellten Sensorelement verbunden werden. In einem Übergangsbereich 14' zwischen dem ersten Kontaktierungsbereich 12' und dem zweiten Kontaktierungsbereich 16' ist analog zum ersten Ausführungsbeispiel eine Positionierungsöffnung 15' angeordnet, welche seitlich durch zwei Übergangsstege 14.1', 14.2' begrenzt ist, wobei ein erster Übergangssteg 14.1' ein erstes Anschlussstück 12.1' mit einem zweiten Anschlussstück 16.1' verbindet, und ein zweiter Übergangssteg 14.2' das andere erste Anschlussstück 12.2' mit dem anderen zweiten Anschlussstück 16.2' verbindet. Dadurch ist es möglich, durch Auftrennen des ersten Verbindungsstegs 13', der die Positionierungsöffnung 15' an einem Ende begrenzt, und des zweiten Verbindungsstegs 17', der die Positionierungsöffnung 15' am anderen Ende begrenzt, zwei getrennte Signalpfade zu schaffen, über welche das nicht dargestellte Sensorelement mit dem Anschlusskabel 2 elektrisch gekoppelt werden kann. Analog zum ersten Ausführungsbeispiel sind der erste Kontaktierungsbereich 12' und der zweite Kontaktierungsbereich 16' des Anschlusselements 10' in verschiedenen Ebenen angeordnet, wobei der Übergangsbereich 14' zur Überbrückung des vorhandenen Höhenunterschieds als schräge Ebene ausgeführt ist. Das Anschlusselement 10' ist beispielsweise als Stanzteil ausgeführt, das nach dem Stanzen in eine gewünschte Form umgeformt wird.

Analog zum ersten Ausführungsbeispiel wird das Anschlusselement 10' zumindest teilweise von einer Kunststoffumspritzung umhüllt, welche im Übergangsbereich 14' eine fensterförmige Aussparung aufweist. Vor dem Spritzvorgang wird das Anschlusselement 10' an den Rändern des Übergangsbereichs 14' zwischen dem ersten Kontaktierungsbereich 12' und dem zweiten Kontaktierungsbereich 16' so gebogen, dass eine schräge Ebene zur Überbrückung des gewünschten Höhenunterschieds zwischen den beiden Kontaktierungsbereichen 12', 16' entsteht. Die fensterförmige Aussparung ist während des Spritzvorgangs der Kunststoffumspritzung im Spritzgusswerkzeug abgedichtet, um Überspritzungen in dem von Kunststoff freizuhaltenden Bereich zu verhindern. Das Anschlusselement 10' wird im Spritzgusswerkzeug über die Positionierungsöffnung 15' im Anschlusselement 10' positioniert. Der die Positionierungsöffnung 15' umgebende Bereich, d.h. die beiden Verbindungsstege 13', 17' und die beiden Übergangsstege 14.1', 14.2', wird zur Erzeugung der fensterförmigen Aussparung flächig im Spritzgusswerkzeug abgedichtet. Nach dem Spritzvorgang werden der erste Verbindungssteg 13' und der zweite Verbindungssteg 17' durchtrennt, um die beiden ersten Anschlussstücke 12.1', 12.2' und die beiden zweiten Anschlussstücke 16.1', 16.2' jeweils elektrisch von einander zu isolieren, um die bereits erwähnten getrennten Signalpfade zu erzeugen.

Fig. 6 zeigt eine schematische, perspektivische Ansicht eines dritten Ausführungsbeispiels des Anschlusselements 10" für eine erfindungsgemäße Anschlussanordnung für eine Sensoranordnung. Hierbei zeigt Fig. 6 das Anschlusselement 10" nach der Herstellung einer doppelten Löt- und/oder Schweißverbindung 11.1", 11.2" mit einem zweiadrigen Anschlusskabel 2.

Wie aus Fig. 6 ersichtlich ist, umfasst das dritte Ausführungsbeispiel des Anschlusselements 10" analog zum ersten und zweiten Ausführungsbeispiel in einem ersten Kontaktierungsbereich 12" zwei erste Anschlussstücke 12.1", 12.2", die über einen ersten Verbindungssteg 13" mit einander verbunden sind. Im Unterschied zum ersten und zweiten Ausführungsbeispiel sind die beiden ersten Anschlussstücke 12.1", 12.2" im ersten Kontaktierungsbereich 12" nicht durch Crimpverbindungen sondern durch Löt- und/oder Schweißverbindungen 11.1 ", 11.2" elektrisch und mechanisch jeweils mit einem abisolierten Ende 3.1, 4.1 einer Ader 3, 4 des Anschlusskabels 2 verbunden. Durch die Verwendung der Löt-und/oder Schweißverbindungen 11.1", 11.2" weisen die beiden ersten Anschlussstücke 12.1 ", 12.2" analog zum zweiten Ausführungsbeispiel ohne weitere Biegevorgänge schon vor dem Herstellen der beiden Löt- und/oder Schweißverbindungen 11.1 ", 11.2" den gewünschten Abstand zu einander auf. In einem zweiten Kontaktierungsbereich 16" umfasst das Anschlusselement 10" analog zum ersten und zweiten Ausführungsbeispiel zwei zweite Anschlussstücke 16.1", 16.2", welche über einen zweiten Verbindungssteg 17" mit einander verbunden sind. Im zweiten Kontaktierungsbereich 16" können die beiden zweiten Anschlussstücke 16.1", 16.2" in einem weiteren Fertigungsschritt elektrisch und mechanisch mit einem nicht dargestellten Sensorelement verbunden werden. In einem Übergangsbereich 14" zwischen dem ersten Kontaktierungsbereich 12" und dem zweiten Kontaktierungsbereich 16" ist analog zum ersten und zweiten Ausführungsbeispiel eine Positionierungsöffnung 15" angeordnet, welche seitlich durch zwei Übergangsstege 14.1", 14.2" begrenzt ist, wobei ein erster Übergangssteg 14.1" ein erstes Anschlussstück 12.1" mit einem zweiten Anschlussstück 16.1" verbindet, und ein zweiter Übergangssteg 14.2" das andere erste Anschlussstück 12.2" mit dem anderen zweiten Anschlussstück 16.2" verbindet. Dadurch ist es möglich, durch Auftrennen des ersten Verbindungsstegs 13", der die Positionierungsöffnung 15" an einem Ende begrenzt, und des zweiten Verbindungsstegs 17", der die Positionierungsöffnung 15" am anderen Ende begrenzt, zwei getrennte Signalpfade zu schaffen, über welche das nicht dargestellte Sensorelement mit dem Anschlusskabel 2 elektrisch gekoppelt werden kann. Analog zum ersten und zweiten Ausführungsbeispiel sind der erste Kontaktierungsbereich 12" und der zweite Kontaktierungsbereich 16" des Anschlusselements 10" in verschiedenen Ebenen angeordnet, wobei der Übergangsbereich 14" zur Überbrückung des vorhandenen Höhenunterschieds als schräge Ebene ausgeführt ist. Das Anschlusselement 10" ist beispielsweise als Stanzteil ausgeführt, das nach dem Stanzen in eine gewünschte Form umgeformt wird.

Analog zum ersten und zweiten Ausführungsbeispiel wird das Anschlusselement 10" zumindest teilweise von einer Kunststoffumspritzung umhüllt, welche im Übergangsbereich 14" eine fensterförmige Aussparung aufweist. Vor dem Spritzvorgang wird das Anschlusselement 10" an den Rändern des Übergangsbereichs 14" zwischen dem ersten Kontaktierungsbereich 12" und dem zweiten Kontaktierungsbereich 16" so gebogen, dass eine schräge Ebene zur Überbrückung des gewünschten Höhenunterschieds zwischen den beiden Kontaktierungsbereichen 12", 16" entsteht. Die fensterförmige Aussparung ist während des Spritzvorgangs der Kunststoffumspritzung im Spritzgusswerkzeug abgedichtet, um Überspritzungen in dem von Kunststoff freizuhaltenden Bereich zu verhindern. Das Anschlusselement 10" wird im Spritzgusswerkzeug über die Positionierungsöffnung 15" im Anschlusselement 10" positioniert. Der die Positionierungsöffnung 15" umgebende Bereich, d.h. die beiden Verbindungsstege 13", 17" und die beiden Übergangsstege 14.1", 14.2", wird zur Erzeugung der fensterförmigen Aussparung flächig im Spritzgusswerkzeug abgedichtet. Nach dem Spritzvorgang werden der erste Verbindungssteg 13" und der zweite Verbindungssteg 17" durchtrennt, um die beiden ersten Anschlussstücke 12.1", 12.2" und die beiden zweiten Anschlussstücke 16.1", 16.2" jeweils elektrisch von einander zu isolieren, um die bereits erwähnten getrennten Signalpfade zu erzeugen.

Ausführungsformen der Erfindung ermöglichen eine einfache Positionierung eines Anschlusselements im Spritzgusswerkzeug und vermeiden unerwünschte Überspritzungen während des Spritzvorgangs. Durch eine Positionierungsöffnung und durch eine flächige Abdichtung des die Positionierungsöffnung umgebenden Bereichs im Spritzgusswerkzeug wird die Herstellung eines Vorproduktes zur Fertigung einer Sensoranordnung, insbesondere zum Messen von Drehzahlen und/oder Drehrichtungen in vorteilhafter Weise verbessert.

## Patentansprüche

1. Anschlussanordnung für eine Sensoranordnung mit einem Anschlusselement (10, 10', 10"), welches in einem ersten Kontaktierungsbereich (12, 12', 12") elektrisch und mechanisch mit einem Ende (3.1, 4.1) von mindestens einer Ader (3, 4) eines Anschlusskabels (2) verbunden ist und in einem zweiten Kontaktierungsbereich (16, 16', 16") elektrisch und mechanisch mit einem Sensorelement verbindbar ist, wobei das Anschlusselement (10, 10', 10") zumindest teilweise von einer Kunststoffumspritzung (20) umhüllt ist, welche in einem Übergangsbereich (14, 14', 14") zwischen dem ersten Kontaktierungsbereich (12, 12', 12") und dem zweiten Kontaktierungsbereich (16, 16', 16") eine fensterförmige Aussparung (22) aufweist, welche während des Spritzvorgangs der Kunststoffumspritzung (20) im Spritzgusswerkzeug abgedichtet ist, **dadurch gekennzeichnet, dass** im Übergangsbereich (14, 14', 14") eine Positionierungsöffnung (15, 15', 15") so angeordnet ist, dass das Anschlusselement (10, 10', 10") im Spritzgusswerkzeug positionierbar ist, und der die Positionierungsöffnung (15, 15', 15") umgebende Übergangsbereich (14, 14', 14") im Spritzgusswerkzeug zur Erzeugung der fensterförmigen Aussparung (22) flächig abgedichtet ist.

2. Anschlussanordnung nach Anspruch 1, **dadurch gekennzeichnet, dass** der erste Kontaktierungsbereich (12, 12', 12") und der zweite Kontaktierungsbereich (16, 16', 16") in verschiedenen Ebenen angeordnet sind, wobei der Übergangsbereich (14, 14', 14") zur Überbrückung des vorhandenen Höhenunterschieds als schräge Ebene ausgeführt ist, in welcher zwei Übergangsstege (14.1, 14.1', 14.1", 14.2, 14.2', 14.2") die Positionierungsöffnung (15, 15', 15") seitlich begrenzen.

3. Anschlussanordnung nach Anspruch 1 oder 2, **dadurch gekennzeichnet, dass** im ersten Kontaktierungsbereich (12, 12', 12") zwei erste Anschlussstücke (12.1, 12.2, 12.1', 12.2', 12.1", 12.2") angeordnet sind, welche über einen ersten Verbindungssteg (13, 13', 13") mit einander verbunden sind, wobei der erste Verbindungssteg (13, 13', 13") die Positionierungsöffnung (15, 15', 15") an einem Ende begrenzt.

4. Anschlussanordnung nach einem der Ansprüche 1 bis 3, **dadurch gekennzeichnet, dass** im zweiten Kontaktierungsbereich (16, 16', 16") zwei zweite Anschlussstücke (16.1, 16.2, 16.1', 16.2', 16.1 ", 16.2") angeordnet sind, welche über einen zweiten Verbindungssteg (17, 17', 17") mit einander verbunden sind, wobei der zweite Verbindungssteg (17, 17', 17") die Positionierungsöffnung (15, 15', 15") an einem anderen Ende begrenzt.

5. Anschlussanordnung nach Anspruch 3 oder 4, **dadurch gekennzeichnet, dass** ein erster Übergangssteg (14.1, 14.1', 14.1") ein erstes Anschlussstück (12.1, 12.1', 12.1") mit einem korrespondierenden zweiten Anschlussstück (16.1, 16.1', 16.1") verbindet, und wobei ein zweiter Übergangssteg (14.2, 14.2', 14.2") ein anderes erstes Anschlussstück (12.2, 12.2', 12.2") mit einem korrespondierenden anderen zweiten Anschlussstück (16.2, 16.2', 16.2") verbindet.

6. Anschlussanordnung nach einem der Ansprüche 3 bis 5, **dadurch gekennzeichnet, dass** der erste Verbindungssteg (13, 13', 13") und/oder der zweite Verbindungssteg (17, 17', 17") nach dem Spritzvorgang durchtrennbar sind, um die beiden ersten Anschlussstücke (12.1, 12.2, 12.1', 12.2', 12.1 ", 12.2") und/oder die beiden zweiten Anschlussstücke (16.1, 16.2, 16.1', 16.2', 16.1", 16.2") von einander zu trennen.

7. Anschlussanordnung nach einem der Ansprüche 1 bis 6, **dadurch gekennzeichnet, dass** im ersten Kontaktierungsbereich (12, 12', 12") die elektrische und mechanische Verbindung der ersten Anschlussstücke (12.1, 12.2, 12.1', 12.2', 12.1 ", 12.2") mit jeweils einem Ende (3.1, 4.1) einer Ader (3, 4) des Anschlusskabels (2) über eine Crimpverbindung (11.1, 11.1' 11.2, 11.2') oder eine Löt- und/oder Schweißverbindung (11.1 ", 11.2") herstellbar ist.

8. Anschlussanordnung nach Anspruch 7, **dadurch gekennzeichnet, dass** die Crimpverbindung (11.1, 11.2, 11.1', 11.2') zwischen den ersten Anschlussstücken (12.1, 12.2, 12.1', 12.2') und jeweils einem Ende (3.1, 4.1) der Adern (3, 4) des Anschlusskabels (2) durch als Crimpfahne ausgeführte erste Anschlussstücke (12.1, 12.2) oder durch zusätzliche Crimpelemente (111, 112) herstellbar ist.

9. Anschlussanordnung nach Anspruch 8, **dadurch gekennzeichnet, dass** die als Crimpfahne ausgeführten ersten Anschlussstücke (12.1, 12.2) nach dem Herstellen der jeweiligen Crimpverbindung (11.1, 11.2) umbiegbar ist, wobei der jeweilige Biegebereich außerhalb des Dichtbereichs zur Herstellung der fensterförmigen Aussparung (22) angeordnet ist.

10. Sensoranordnung für ein Fahrzeug, insbesondere zur Ermittelung einer Drehzahl und/oder Drehrichtung, mit einem Sensorelement, **gekennzeichnet durch** eine Anschlussanordnung (1) nach einem der Ansprüche 1 bis 9.

## Claims

1. Connection assembly for a sensor assembly having a connection element (10, 10', 10'') which is electrically and mechanically connected to one end (3.1, 4.1) of at least one core (3, 4) of a connection cable (2) in a first contact-making region (12, 12', 12'') and can be electrically and mechanically connected to a sensor element in a second contact-making region (16, 16', 16''), with the connection element (10, 10', 10'') being at least partially encased by an injection-moulded plastic encapsulation (20) which has a window-like cutout (22) in a transition region (14, 14', 14'') between the first contact-making region (12, 12', 12" ) and the second contact-making region (16, 16', 16''), said cutout being sealed off during the injection process for the injection-moulded plastic encapsulation (20) in the injection-molding die, **characterized in that** a positioning opening (15, 15', 15'') is arranged in the transition region (14, 14', 14'') such that the connection element (10, 10', 10'') can be positioned in the injection-molding die, and the transition region (14, 14', 14''), which surrounds the positioning opening (15, 15', 15''), in the injection-molding die for producing the window-like cutout (22) is sealed off so that it is flat.

2. Connection assembly according to Claim 1, **characterized in that** the first contact-making region (12, 12', 12'') and the second contact-making region (16, 16', 16'') are arranged in different planes, with the transition region (14, 14', 14'') being designed, in order to bridge the existing height difference, as a sloping plane in which two transition webs (14.1, 14.1', 14.1" ; 14.2, 14.2', 14.2'') laterally delimit the positioning opening (15, 15', 15'').

3. Connection assembly according to Claim 1 or 2, **characterized in that** two first connection pieces (12.1, 12.2, 12.1', 12.2' , 12. 1" , 12.2") are arranged in the first contact-making region (12, 12', 12"), said connection pieces being connected to one another by means of a first connecting web (13, 13', 13"), with the first connecting web (13, 13', 13") delimiting the positioning opening (15, 15', 15'') at one end.

4. Connection assembly according to one of Claims 1 to 3, **characterized in that** two second connection pieces (16.1, 16.2, 16.1', 16.2', 16.1", 16.2'') are arranged in the second contact-making region (16, 16', 16''), said connection pieces being connected to one another by means of a second connecting web (17, 17', 17''), with the second connecting web (17, 17', 17") delimiting the positioning opening (15, 15', 15'') at another end.

5. Connection assembly according to Claim 3 or 4, **characterized in that** a first transition web (14.1, 14.1', 14.1'') connects a first connection piece (12.1, 12.1', 12.1'') to a corresponding second connection piece (16.1, 16.1', 16.1''), and with a second transition web (14.2, 14.2', 14.2'') connecting another first connection piece (12.2, 12.2', 12.2") to another corresponding second connection piece (16.2, 16.2', 16.2'').

6. Connection assembly according to one of Claims 3 to 5, **characterized in that** the first connecting web (13, 13', 13'') and/or the second connecting web (17, 17', 17'') can be severed after the injection process in order to separate the two first connection pieces (12.1, 12.2, 12.1', 12.2', 12.1" , 12.2") and/or the two second connection pieces (16.1, 16.2, 16.1', 16.2', 16. 1" , 16.2'') from one another.

7. Connection assembly according to one of Claims 1 to 6, **characterized in that** the electrical and mechanical connection in the first contact-making region (12, 12', 12") between the first connection pieces (12.1, 12.2, 12.1', 12.2', 12.1", 12.2'') and in each case one end (3.1, 4.1) of a core (3, 4) of the connection cable (2) can be established by means of a crimped connection (11.1, 11.1', 11.2, 11.2') or a soldered and/or welded connection (11.1" , 11.2'').

8. Connection assembly according to Claim 7, **characterized in that** the crimped connection (11.1, 11.2, 11.1', 11.2') between the first connection pieces (12.1, 12.2, 12.1', 12.2') and in each case one end (3.1, 4.1) of the cores (3, 4) of the connection cable (2) can be established by first connection pieces (12.1, 12.2) which are designed as a crimping lug or by additional crimping elements (111, 112).

9. Connection assembly according to Claim 8, **characterized in that** the first connection pieces (12.1, 12.2), which are designed as a crimping lug, can be bent after the respective crimped connection (11.1, 11.2) is established, with the respective bending region being arranged outside the sealing region for producing the window-like cutout (22).

10. Sensor assembly for a vehicle, in particular for establishing a rotation speed and/or direction of rotation, having a sensor element, **characterized by** a connection assembly (1) according to one of Claims 1 to 9.

## Revendications

1. Ensemble de raccordement pour ensemble de capteur, l'ensemble de raccordement présentant un élément de raccordement (10, 10', 10'') raccordé électriquement et mécaniquement dans une première partie de contact (12, 12', 12 ") à une extrémité (3.1, 4.1) d'au moins un fil (3, 4) d'un câble de raccordement (2) et apte à être raccordé électriquement et mécaniquement à un élément de capteur dans une deuxième partie de contact (16, 16', 16"),
l'élément de raccordement (10, 10', 10'') étant englobé au moins en partie par un englobement (20) en matière synthétique qui présente une découpe (22) en forme de fenêtre dans une partie de transition (14, 14', 14'') entre la première partie de contact (12, 12', 12 ") et la deuxième partie de contact (16, 16', 16 ") et qui est fermée hermétiquement dans l'outil de moulage par injection pendant l'opération d'injection de l'englobement (20) en matière synthétique, **caractérisé en ce que**
une ouverture de positionnement (15, 15', 15'') est disposée dans la partie de transition (14, 14', 14 ") de telle sorte que l'élément de raccordement (10, 10', 10'') puisse être placé dans l'outil de moulage par injection et
**en ce que** la partie de transition (14, 14', 14'') qui entoure l'ouverture de positionnement (15, 15', 15'') est fermée hermétiquement sur sa surface située dans l'outil de moulage par injection en vue de former la découpe (22) en forme de fenêtre.

2. Ensemble de raccordement selon la revendication 1, **caractérisé en ce que** la première partie de contact (12, 12', 12'') et la deuxième partie de contact (16, 16', 16'') sont disposées dans des plans différents, la partie de transition (14, 14', 14'') étant configurée en vue de compenser la différence de hauteur sous la forme d'un plan oblique dans lequel deux nervures de transition (14.1, 14.1', 14.1'', 14.2, 14.2', 14.2'') délimitent latéralement l'ouverture de positionnement (15, 15', 15'').

3. Ensemble de raccordement selon les revendications 1 ou 2, **caractérisé en ce que** dans la première partie de contact (12, 12', 12''), deux premières pièces de contact (12.1, 12.2, 12.1', 12.2', 12.1'', 12.2 ") sont disposées et sont raccordées l'une à l'autre par une première nervure de raccordement (13, 13', 13''), la première nervure de raccordement (13, 13', 13'') délimitant une extrémité de l'ouverture de positionnement (15, 15', 15'').

4. Ensemble de raccordement selon les revendications 1 à 3, **caractérisé en ce que** dans la deuxième partie de contact (16, 16', 16''), deux deuxièmes pièces de raccordement (16.1, 16.2, 16.1', 16.2', 16.1'', 16.2'') sont disposées et sont raccordées l'une à l'autre par une deuxième nervure de raccordement (17, 17', 17''), la deuxième nervure de raccordement (17, 17', 17'') délimitant l'ouverture de positionnement (15, 15', 15'') à l'autre extrémité.

5. Ensemble de raccordement selon les revendications 3 ou 4, **caractérisé en ce qu'**une première nervure de transition (14.1, 14.1', 14.1") relie une première pièce de raccordement (12.1, 12.1', 12.1'') à une deuxième pièce de raccordement (16.1, 16.1', 16.1") correspondante, une deuxième nervure de transition (14.2, 14.2', 14.2'') reliant une autre première pièce de raccordement (12.2, 12.2', 12.2'') à une autre deuxième pièce de raccordement (16.2, 16.2', 16.2'') correspondante.

6. Ensemble de raccordement selon l'une des revendications 3 à 5, **caractérisé en ce que** la première nervure de raccordement (13, 13', 13'') et/ou la deuxième nervure de raccordement (17, 17', 17'') peuvent être séparées après l'opération d'injection pour séparer l'une de l'autre les deux premières pièces de raccordement (12.1, 12.2, 12.1', 12.2', 12.1'', 12.2'') et/ou les deux deuxièmes pièces de raccordement (16.1, 16.2 16.1', 16.2', 16.1", 16.2'').

7. Ensemble de raccordement selon l'une des revendications 1 à 6, **caractérisé en ce que** le raccordement électrique et mécanique de la première pièce de raccordement (12.1, 12.2, 12.1', 12.2', 12.1", 12.2'') à une extrémité (3.1, 4.1) d'un fil (3, 4) du câble de raccordement (2) peut être réalisé dans la première partie de contact (12, 12', 12'') par une liaison sertie (11.1, 11.1', 11.2, 11.2'), une liaison brasée et/ou une liaison soudée (11.1'', 11.2 ").

8. Ensemble de raccordement selon la revendication 7, **caractérisé en ce que** la liaison sertie (11.1, 11.2, 11.1', 11.2') entre les premières pièces de raccordement (12.1, 12.2, 12.1', 12.2') et une extrémité (3.1, 4.1) d'un fil (3, 4) du câble de raccordement (2) peut être réalisée par des premières pièces de raccordement (12.1, 12.2) réalisées sous la forme d'ailettes de sertissage ou par des éléments supplémentaires de sertissage (111, 112).

9. Ensemble de raccordement selon la revendication 8, **caractérisé en ce que** les premières pièces de raccordement (12.1, 12.2) réalisées sous la forme d'ailettes de sertissage peuvent être fléchies après la réalisation de la liaison sertie (11.1, 11.2) correspondante, chaque partie de flexion étant disposée à l'extérieur de la partie d'étanchéité en vue de former la découpe (22) en forme de fenêtre.

10. Ensemble de capteur pour véhicule, servant en particulier à déterminer la vitesse de rotation et/ou le sens de rotation et doté d'un élément de capteur **caractérisé par** un ensemble de raccordement (1) selon l'une des revendications 1 à 9.
